# EUROPÄISCHE PATENTANMELDUNG

(11) **EP 3 108 995 A2**
(43) Veröffentlichungstag der Anmeldung: **28.12.2016**
(21) Anmeldenummer: 16172763.1
(22) Anmeldetag: 02.06.2016
(51) Int. Cl.: B23Q 1/00, B23Q 3/06

(54) **BEARBEITUNGSMASCHINE**

(30) Priorität: 02.06.2015 DE 102015108730
(71) Anmelder: Grob-Werke GmbH & Co. KG, 87719 Mindelheim (DE)
(72) Erfinder: Grob, Burkhart, verstorben (DE)
(74) Vertreter: Pfister & Pfister Patent- und Rechtsanwälte

(57) **Zusammenfassung**

Die Erfindung betrifft eine Bearbeitungsmaschine mit einem Werkstücktisch, wobei ein auf dem Werkstücktisch angeordnetes Spann- oder Hebemittel durch temporäre Energieübertragung von außerhalb des Werkstücktisches betätigt wird. Die Erfindung betrifft des Weiteren ein zugehöriges Verfahren.

## Beschreibung

Die Erfindung betrifft eine Bearbeitungsmaschine, insbesondere eine spanabhebende Bearbeitungsmaschine mit mindestens einer je ein Werkzeug rotativ antreibenden Motorspindel und einem Werkstücktisch, an oder auf welchem das mindestens eine Werkstück unmittelbar oder mittelbar über eine das Werkstück tragende Palette während der spanabhebenden Bearbeitung durch eine Spannvorrichtung aufgespannt ist. Für den Transport des Werkstückes bzw. der das Werkstück tragenden Palette von einem Vorplatz zum Werkstücktisch und zurück kann zumindest auf der Werkstücktischoberfläche eine Rollenbahn vorgesehen sein, auf der das Werkstück bzw. die Palette für den Transport aufliegt. Die Palette kann auf ihrer Unterseite mit Laufrollen ausgestattet sein, wobei sich die Laufrollen in der Spannposition des Werkstückes bzw. der Palette auf dem Werkstücktisch je in einem Laufbahnabschnitt befinden. Im Werkstücktisch kann eine Hebevorrichtung vorgesehen sein.

Moderne Bearbeitungsmaschinen erlauben eine mehrseitige Bearbeitung des Werkstückes. Dies kann unter anderem dadurch erreicht werden, dass der Werkstücktisch zumindest um eine vertikale Achse drehbar ausgestattet ist. Es ist bekannt, im Werkstücktisch die Spannvorrichtung für das Festspannen der Palette oder des Werkstückes sowie eine Hebevorrichtung für die Laufrollen bzw. die Rollenbahn vorzusehen. Sowohl die Spannvorrichtung, wie auch die Hebevorrichtung benötigen Energie, sei es ein hydraulischer oder pneumatischer Anschluss oder Strom, um in Funktion treten zu können.

Im Stand der Technik ist es bekannt, diese Energie über eine Energieleitung in den Werkstücktisch zu führen. Dabei ist die Energieversorgung mit dauerhaft festen Verbindungen gelöst. Diese Energieleitung muss so ausgestaltet sein, dass eine Drehbewegung um die vorgeschriebene Drehachse grundsätzlich möglich ist. Diese Randbedingungen führen zu entsprechend aufwändigen und auch wartungsintensiven Drehverbindungen für die Energieleitung.

Es ist Aufgabe dieser Erfindung, diesen Stand der Technik zu verbessern.

Dies wird durch Bearbeitungsmaschinen gemäß den Hauptansprüchen sowie ein Verfahren gemäß dem unabhängigen Verfahrensanspruch gelöst. Vorteilhafte Ausgestaltungen können beispielsweise den jeweiligen Unteransprüchen entnommen werden.

Die Erfindung betriff eine Bearbeitungsmaschine, insbesondere eine spanabhebende Bearbeitungsmaschine mit mindestens einer je ein Werkzeug rotativ antreibenden Motorspindel und einem Werkstücktisch, an oder auf welchem das mindestens eine Werkstück unmittelbar oder mittelbar über eine das Werkstück tragende Palette während der spanabhebenden Bearbeitung durch eine Spannvorrichtung aufgespannt ist. Die Spannvorrichtung umfasst zumindest ein Spannmittel, einen Spannantrieb und einen Spannenergieanschluss, wobei das Spannmittel mit dem Werkstück oder der das Werkstück tragenden Palette zusammenwirkt, der Spannantrieb, unter Verwendung der vom Spannenergieanschluss zur Verfügung gestellten Energie, das Spannmittel zum Spannen und/oder Lösen des Werkstückes antreibt und der Spannenergieanschluss temporär mit einem Energieübertragungsanschlussstück verbindbar ist, wobei das Energieübertragungsanschlussstück mit einer Energiequelle in Wirkverbindung steht und das Energieübertragungsanschlussstück relativ zum Spannenergieanschluss durch einen Bewegungsantrieb anstellbar oder zurück bewegbar ist.

Die Erfindung betrifft des Weiteren eine Bearbeitungsmaschine, insbesondere eine spanabhebende Bearbeitungsmaschine, mit mindestens einer je ein Werkzeug rotativ antreibenden Motorspindel und einem Werkstücktisch, an oder auf welchem das mindestens eine Werkstück unmittelbar oder mittelbar über eine das Werkstück tragende Palette während der spanabhebenden Bearbeitung lagegenau durch eine Spannvorrichtung aufgespannt ist. Insbesondere kann es sich um eine Bearbeitungsmaschine wie vorstehend beschrieben handeln. Für den Transport des Werkstückes bzw. der das Werkstück tragenden Palette von einem Vorplatz zum Werkstücktisch und zurück ist auf der Werkstücktischoberfläche eine Rollenbahn vorgesehen, auf der das Werkstück bzw. die Palette für den Transport aufliegt, oder die Palette ist auf ihrer Unterseite mit Laufrollen ausgestattet und die Laufrollen befinden sich in der Spannposition des Werkstückes bzw. der Palette auf dem Werkstücktisch je in einem Laufbahnabschnitt. Im Werkstücktisch ist eine Hebevorrichtung vorgesehen, wobei die Hebevorrichtung zumindest ein Hebemittel, einen Hebeantrieb und einen Hebeenergieanschluss umfasst, wobei das Hebemittel mit der Rollenbahn oder den Laufbahnabschnitten zusammenwirkt, der Hebeantrieb, unter Verwendung der von dem Hebeenergieanschluss zur Verfügung gestellten Energie, das Hebemittel zum Absenken und/oder Anheben der Rollenbahn oder des Laufbahnabschnittes antreibt und der Hebeenergieanschluss temporär mit einem Energieübertragungsanschlussstück verbindbar ist, wobei das Energieübertragungsanschlussstück mit einer Energiequelle in Wirkverbindung steht und das Energieübertragungsanschlussstück relativ zum Hebeenergieanschluss durch einen Bewegungsantrieb anstellbar oder zurück bewegbar ist.

Der Pfiff der Erfindung liegt darin, dass erkannt wurde, dass für die Funktion der Spann- bzw. Hebevorrichtung nicht dauerhaft eine Energieleitung angeschlossen sein muss. Die Erfindung schlägt insbesondere vor, die für den Betrieb der Spannvorrichtung bzw. Hebevorrichtung notwendige Energie nur temporär beschränkt über ein separat anstellbares Energieübertragungsanschlussstück an einerseits den Spannenergieanschluss oder andererseits den Hebeenergieanschluss zu leiten. Dadurch vermeidet der erfindungsgemäße Vorschlag die im Stand der Technik bekannten, konstruktiv aufwändigen und auch wartungsintensiven Drehanschlüsse bzw. Drehverbindungen. Der erfindungsgemäße Vorschlag ist dabei in Bezug auf alle im Werkstücktisch angeordneten, Energie benötigenden Funktionen anwendbar, es wird eben nur ein mit dem Energieübertragungsanschlussstück zusammenwirkender Energieanschluss an der jeweiligen Vorrichtung vorgesehen.

Üblicherweise liegt das Werkstück bzw. die das Werkstück tragende Palette auf dem Werkstücktisch auf. Die Erfindung ist jedoch nicht auf diese geometrische Anordnung beschränkt. Als Werkstücktisch im Sinne dieser Anmeldung wird auch eine Anordnung verstanden, bei welcher das Werkstück bzw. die Palette in der Bearbeitungssituation hängend gespannt ist.

Der erfindungsgemäße Vorschlag ist auch auf Bauformen anwendbar, bei welcher eine Palette mehr als nur ein Werkstück, zum Beispiel zwei, drei, vier, oder noch mehr Werkstücke trägt.

Als äquivalent wird hierbei auch das Prinzip der kinematischen Umkehr bei der Ausgestaltung des Energieanschlusses angesehen. Es ist zum Beispiel möglich, einen (mechanischen oder elektrischen) Energiespeicher in dem Werkstücktisch vorzusehen, der, bei Bedarf, auf einen Antrieb des beweglich gelagerten Spann- bzw. Hebeenergieanschlusses wirkt und so eine Anstellbewegung in Richtung des Energieanschlussstückes ausführt.

Als Vorplatz, von welchem aus die das Werkstück tragende Palette zu dem Werkstücktisch hin und wieder zurücktransportiert wird, kann zum Beispiel ein Ort angesehen werden, an welchem die Palette mit dem zu bearbeitenden Werkstück gerüstet, also vorbereitet wird. Der Vorplatz kann aber auch eine Wechselposition bei einer durch eine Verkettung verbundenen Linie von Bearbeitungsmaschinen sein.

In einer verbesserten Ausgestaltung der Erfindung ist alternativ vorgesehen sein, die in dieser Anmeldung vorgestellten Konzepte miteinander zu kombinieren.

Gemäß einer Ausführung ist vorgesehen, dass der Werkstücktisch entlang einer Linearführung durch einen Linearantrieb beweg- und positionierbar ist. Dies ermöglicht eine automatisierte Verschiebung und Positionierung des Werkstücktisches, insbesondere in horizontaler Richtung.

Des Weiteren ist in dem Vorschlag vorteilhafter Weise vorgesehen, dass der Werkstücktisch um eine vertikale Drehachse bzw. einer zur linearen Achse rechtwinkligen Drehachse durch einen Drehantrieb beweg- und positionierbar ist. Dies ermöglicht eine allseitige Bearbeitung eines auf dem Werkstücktisch positionierten oder eingespannten Werkstücks.

Bei einer bevorzugten Ausgestaltung des Vorschlags ist vorgesehen, dass bei der relativen Anstellbewegung von Energieübertragungsanschlussstück einerseits und dem Spannenergie- oder Hebeenergieanschluss andererseits diese ineinander, insbesondere formschlüssig ineinander gesteckt werden. Dies ermöglicht eine unmittelbare Übertragung einer Bewegung, insbesondere einer rotatorischen Bewegung. Beispielsweise kann eine Bewegung einer Spindel oder eines anderen Werkzeugs, insbesondere eines rotatorisch angetriebenen Werkzeugs, z.B. eines Schraubers, übertragen werden. Dabei kann es sich insbesondere um ein Werkzeug handeln, welches ohnehin vorhanden ist, also auch ohne die Funktionalität der Betätigung des Spannenergie- oder Hebeenergieanschlusses vorhanden wäre.

Des Weiteren ist vorgesehen, dass am Werkstücktisch ein zentraler Energieanschluss vorgesehen ist, der temporär als Spannenergieanschluss und temporär als Hebeenergieanschluss dient und eine Umschaltvorrichtung für das wahlweise Verbinden des Spannantriebes oder des Hebeantriebes mit dem Energieanschluss vorgesehen ist. Damit kann auf das Vorsehen zweier separater Energieanschlüsse verzichtet werden. Dies ermöglicht eine kompakte Bauform. Die Umschaltvorrichtung kann beispielsweise über einen mechanisch von außen zu betätigenden Schalter oder über eine elektrische, beispielsweise über Funk fernbedienbare Betätigungseinrichtung betätigbar sein.

In einer vorteilhaften Ausgestaltung ist vorgesehen, dass als Energiequelle die Rotationsenergie eines Schraubers oder der Motorspindel, elektrische Energie, pneumatische oder hydraulische Energie dient und das Energieübertragungsanschlussstück als drehmomentübertragendes Element, zum Beispiel als Mehrkant, als elektrischer Steckkontakt oder als pneumatisches bzw. hydraulisches Kupplungselement ausgebildet ist. Damit können entsprechende zur Verfügung stehende Energieformen genutzt werden. Beispielsweise kann Rotationsenergie eines Schraubers oder der Motorspindel genutzt werden. Es kann auch elektrische Energie genutzt werden, wozu beispielsweise entsprechende elektrische Stecker oder Kontakte am Energieübertragungsanschlussstück und am Spann- und/oder Hebeenergieanschluss vorgesehen sein können. Außerdem kann eine hydraulisch oder pneumatisch zur Verfügung stehende Energie verwendet werden.

Der Werkstückwechsel erfolgt typischerweise in Zeiten, wo keine Bearbeitung des Werkstückes erfolgt und daher die Motorspindel nicht im Einsatz ist. Gerade in diesen Wechselpausen wird gemäß dem erfindungsgemäßen Vorschlag jetzt die Motorspindel zusätzlich genutzt.

Die sowieso vorhandenen Antriebe sind dafür geeignet und ausgelegt. Dieser zusätzliche Nutzen verursacht keine zusätzlichen Kosten!

Geschickter Weise ist vorgesehen, dass der Spannenergieanschluss bzw. der Hebeenergieanschluss als Wellenstutzen zum Abtrieb der anschließbaren Rotationsenergiequelle, als elektrischer Steckgegenkontakt oder als hydraulisches bzw. pneumatisches Kupplungsgegenelement ausgebildet ist. Auch dies ermöglicht die vorteilhafte Nutzung beispielsweise der weiter oben bereits beschriebenen Energiequellen.

In einer weiteren bevorzugten Ausführungsform ist vorgesehen, dass das Energieübertragungsanschlussstück an der Bearbeitungsmaschine ortsfest angeordnet ist und der Werkstücktisch und damit verbunden der Spann- bzw. Hebeenergieanschluss entlang einer Linearführung in einer Linearbewegung oder rotativ in einer Drehbewegung um eine Drehachse an das Energieübertragungsanschlussstück anstellbar, verbindbar und auch wieder trennbar ist. Dies ermöglicht die Realisierung der erfindungsgemäßen Vorteile auch in dem Fall, dass beispielsweise eine Werkzeugspindel ortsfest angeordnet ist.

Des Weiteren ist günstiger Weise vorgesehen, dass der Bewegungsantrieb identisch ist mit dem Linearantrieb. Das Vorsehen eines zusätzlichen Antriebs kann damit vermieden werden.

Vorteilhafter Weise ist vorgesehen, dass die Motorspindel entlang zweier Linearachsen durch je einen Motorspindellinearantrieb beweglich positionierbar ist, wobei die beiden Linearachsen der Motorspindel rechtwinklig zur Längserstreckung der Linearführung des Werkstücktischs angeordnet sind. Dies ermöglicht eine zweidimensionale und damit flexiblere Positionierung, wobei die Linearführung des Werkstücktischs eine weitere Achse übernehmen kann.

Des Weiteren ist in dem Vorschlag vorteilhafter Weise vorgesehen, dass der Bewegungsantrieb gebildet ist von mindestens einem Motorspindellinearantrieb. Damit kann der Bewegungsantrieb die Motorspindel linear bewegen.

Gemäß einer Ausführung ist vorgesehen, dass als Spann- oder Hebeantrieb ein Getriebe, eine Hydraulikpumpe, ein Elektromotor ein Druckvorrat oder Druckspeicher vorgesehen ist. Damit können beispielsweise die weiter oben bereits beschriebenen Energiequellen in vorteilhafter Weise verwendet werden.

Bei einer bevorzugten Ausgestaltung des Vorschlags ist vorgesehen, dass als Spannmittel eine federbelastete Spannzangenanordnung vorgesehen ist und der Spannantrieb eine der Feder entgegen gerichtete Kraft für das Öffnen des Spannmittels entfaltet. Damit kann ein Werkstück durch eine mittels der Feder definierte Kraft gehalten werden, wobei die durch die Feder vermittelte Kraft nur beim Öffnen, beispielsweise zum Wechseln des Werkstücks, vom Spannantrieb überwunden wird.

Des Weiteren ist vorgesehen, dass das Hebemittel eine Linearführung aufweist und die Rollenbahn oder den Laufbahnabschnitt anhebt bzw. absenkt. Dies ermöglicht insbesondere eine Fixierung der Palette oder des Werkstücks durch Anheben, was die Bearbeitung mittels eines Werkzeugs deutlich erleichtert.

In einer vorteilhaften Ausgestaltung ist vorgesehen, dass am Werkstücktisch, insbesondere im Bereich des Spann- bzw. Hebeenergieanschlusses ein Steuerungsleitungsanschluss angeordnet ist, der mit dem Spannantrieb, dem Hebeantrieb oder der Umschaltvorrichtung in Wirkverbindung steht und mit einem Steuerleitungsanschlussstück verbindbar ist und das Steuerleitungsanschlussstück mit der Maschinensteuerung der Bearbeitungsmaschine in Verbindung steht und das Steuerleitungsanschlussstück durch einen Bewegungsantrieb relativ zum Steuerleitungsanschluss anstellbar und zurück bewegbar ist. Dies ermöglicht die Übertragung von Informationen zwischen der Maschinensteuerung und dem Werkstücktisch, Komponenten des Werkstücktisches und/oder dem zu bearbeitenden Werkstück oder seinen Komponenten. Es ermöglicht insbesondere auch die Übertragung von Steuerbefehlen von der Maschinensteuerung auf den Werkstücktisch, womit beispielsweise die Umschaltvorrichtung betätigt werden kann. Damit kann ausgewählt werden, ob Energie zum Spann- oder zum Hebeenergieanschluss geleitet werden soll.

Des Weiteren ist in dem Vorschlag vorteilhafter Weise vorgesehen, dass je zwei der vorzugsweise vier Hebe- bzw. Spannmittel über einen Teilenergiestrang verbunden sind Dies ermöglicht eine gemeinsame Betätigung von je zwei Hebe- bzw. Spannmitteln, so dass diese gleichläufig arbeiten. Damit kann beispielsweise vermieden werden, dass aufgrund unterschiedlicher oder ungenauer Betätigung der Hebe- oder Spannmittel das Werkstück schief angehoben wird oder in einer anderen als der gewünschten Lage fixiert wird. Dies hilft, Bearbeitungsfehler zu vermeiden und Toleranzen zu minimieren.

In einer weiteren bevorzugten Ausführungsform ist vorgesehen, dass das Spannmittel eine Spannkraft parallel, insbesondere radial bezogen auf die Drehachse oder rechtwinklig zur Werkstückoberfläche des Werkstücktischs entfaltet. Dier ermöglicht einen einfachen und definierten Kraft- und Bewegungsverlauf.

Die Erfindung betrifft des Weiteren eine Bearbeitungsmaschine mit mindestens einer Motorspindel und einem Werkstücktisch, auf welchem das mindestens eine Werkstück während der Bearbeitung durch eine Spannvorrichtung aufgespannt ist. Die Spannvorrichtung umfasst zumindest ein Spannmittel, einen Spannantrieb und einen Wellenstutzen, wobei das Spannmittel mit dem Werkstück oder einer das Werkstück tragenden Palette zusammenwirkt. Der Spannantrieb treibt, unter Verwendung der am Wellenstutzen zur Verfügung gestellten Energie, das Spannmittel zum Spannen und/oder Lösen des Werkstückes an und der Wellenstutzen ist temporär mit einem Schrauber oder der Motorspindel verbindbar, wobei der Schrauber oder die Motorspindel relativ zum Wellenstutzen durch einen Bewegungsantrieb anstellbar oder zurück bewegbar ist.

Mittels einer solchen Ausführung einer Bearbeitungsmaschine können ähnliche oder identische Vorteile erreicht werden wie mit der bereits weiter oben beschriebenen Ausführung. Es sei des Weiteren erwähnt, dass alle ansonsten in dieser Anmeldung beschriebenen Varianten und Ausführungsformen auch auf die eben beschriebene Ausführung entsprechend angewendet werden können.

Die Erfindung betrifft des Weiteren eine Bearbeitungsmaschine mit mindestens einer Motorspindel und einem Werkstücktisch, auf welchem das mindestens eine Werkstück während der Bearbeitung durch eine Spannvorrichtung aufgespannt ist. Im Werkstücktisch ist eine Hebevorrichtung vorgesehen, wobei die Hebevorrichtung zumindest ein Hebemittel, einen Hebeantrieb und einen Wellenstutzen umfasst. Das Hebemittel wirkt mit der Rollenbahn zusammen. Der Hebeantrieb treibt unter Verwendung der von dem Wellenstutzen zur Verfügung gestellten Energie das Hebemittel zum Absenken und/oder Anheben der Rollenbahn an und der Wellenstutzen ist temporär mit einem Schrauber oder der Motorspindel verbindbar, wobei der Schrauber oder die Motorspindel relativ zum Wellenstutzen durch einen Bewegungsantrieb anstellbar oder zurück bewegbar ist.

Auch mit einer solchen Ausführung können ähnliche oder identische Vorteile erreicht werden wie weiter oben mit Bezug auf die dort beschriebene Ausführung mit Hebevorrichtung beschrieben. Auch hier sei verstanden, dass alle in dieser Anmeldung beschriebenen Varianten und Ausführungsformen auch auf die eben beschriebene Ausführung angewendet werden können.

Die Erfindung betrifft des Weiteren ein Verfahren für das Laden eines Werkstückes von einem Vorplatz auf oder an den Werkstücktisch einer Bearbeitungsmaschine. Insbesondere kann es sich dabei um einen Werkstücktisch gemäß einer oder mehrerer in dieser Anmeldung beschriebenen Ausführungen handeln. Der Werkstücktisch weist eine Hebevorrichtung und eine Spannvorrichtung auf, wobei das Werkstück auf einer im Werkstücktisch angeordneten Rollenbahn oder das Werkstück auf einer das Werkstück tragenden Palette mit Laufrollen auf dem Werkstücktisch transportiert wird. Die Laufrollen befinden sich am Ende der Bewegung auf Laufbahnabschnitten, wobei gleichzeitig oder danach ein Energieübertragungsanschlussstück derart relativ zum Werkstücktisch bewegt wird, dass eine Verbindung zwischen dem Energieübertragungsanschlussstück und einem Hebeenergieanschluss hergestellt wird, hierüber dann Energie zu einem Hebemittel der Hebevorrichtung gelangt und die Rollenbahn oder die Laufbahnabschnitte derart abgesenkt wird/werden, dass die Rollenbahn bzw. Laufrollen nicht mehr aktiv sind und das Werkstück bzw. die das Werkstück tragende Palette auf dem Werkstücktisch ruht. Gleichzeitig oder hernach wird das Energieübertragungsanschlussstück derart relativ zum Werkstücktisch bewegt oder die Umschaltvorrichtung wird derart betätigt, dass eine Verbindung zwischen dem Energieübertragungsanschlussstück und einem Spannenergieanschluss hergestellt wird, hierüber dann Energie zu einem Spannmittel der Spannvorrichtung gelangt und an dem Werkstück oder der das Werkstück tragenden Palette angeordnete, mit dem Spannmittel zusammenwirkende Spannelemente zugreifen und lagegenau auf dem Werkstücktisch festspannen und hernach das Energieübertragungsanschlussstück relativ zum Spannenergieanschluss beabstandet wird, wodurch die Wirkverbindung von Energieübertragungsanschlussstück und Spannenergieanschluss getrennt wird.

Mittels des erfindungsgemäßen Verfahrens können die weiter oben mit Bezug auf erfindungsgemäße Vorrichtungen beschriebenen Vorteile erreicht werden. Es sei verstanden, dass die mit Bezug auf erfindungsgemäße Vorrichtungen beschriebenen Ausführungen und Varianten grundsätzlich auch auf das erfindungsgemäße Verfahren anwendbar sind. Gleiches gilt umgekehrt.

In einer Ausführung des Verfahrens ist vorgesehen, dass nachdem das Werkstück bzw. die das Werkstück tragende Palette auf dem Werkstücktisch ruht, der Werkstücktisch gedreht und/oder linear bewegt wird. Dies ermöglicht ein automatisiertes und exaktes Bewegen und/oder Positionieren des Werkstücks.

Des Weiteren ist günstiger Weise vorgesehen, dass zunächst das Energieübertragungsanschlussstück mit dem Hebeenergieanschluss verbunden ist, diese Verbindung getrennt wird, der Werkstücktisch gedreht und/oder linear bewegt wird und hernach das Energieübertragungsanschlussstück mit dem Spannenergieanschluss verbunden wird. Dies ermöglicht insbesondere ein Spannen des Werkstücks, nachdem es mittels des Werkstücktisches in Position gebracht wurde.

Da die beiden Abläufe Rollen bzw. Heben einerseits und Spannen andererseits sich zeitlich nicht überlappen, ist es günstig, ein und dasselbe Energieanschlussstück nacheinander an die verschiedenen Energieanschlüsse der vorgesehenen Vorrichtungen, hier der Hebevorrichtung und der Spannvorrichtung, heranzuführen. Hierbei kann geschickterweise die Beweglichkeit des Werkstücktisches einerseits aber auch die Beweglichkeit des Energieanschlussstückes andererseits genutzt werden.

In diesem Zusammenhang wird insbesondere darauf hingewiesen, dass alle im Bezug auf die Bearbeitungsmaschine beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Ansprüche für die Bearbeitungsmaschine berücksichtigt und beansprucht werden und zählen ebenfalls zur Offenbarung.

Des Weiteren umfasst die Erfindung auch die Verwendung einer erfindungsgemäßen Bearbeitungsmaschine gemäß einer oder mehrerer der beschriebenen Ausführungen für den Zweck des Spannens und/oder Bearbeitens eines Werkstücks.

In der Zeichnung ist die Erfindung insbesondere in Ausführungsbeispielen schematisch dargestellt. Es zeigen:
- Fig. 1: eine Seitenansicht einer Bearbeitungsmaschine nach der Erfindung gemäß einem ersten Ausführungsbeispiel,
- Fig. 2: eine Draufsicht auf die Bearbeitungsmaschine gemäß dem ersten Ausführungsbeispiel,
- Fig. 3a: eine seitliche Schnittansicht eines Werkstücktischs einer Bearbeitungsmaschine nach der Erfindung gemäß einem zweiten Ausführungsbeispiel,
- Fig. 3b: eine seitliche Schnittansicht eines Werkstücktischs einer Bearbeitungsmaschine nach der Erfindung gemäß einem dritten Ausführungsbeispiel,
- Fig. 4: eine weitere seitliche Schnittansicht des Werkstücktischs der Bearbeitungsmaschine gemäß dem dritten Ausführungsbeispiel,
- Fig. 5: eine seitliche Schnittansicht eines Werkstücktischs einer Bearbeitungsmaschine nach der Erfindung gemäß einem vierten Ausführungsbeispiel,
- Fig. 6a: eine Draufsicht auf einen Werkstücktisch einer Bearbeitungsmaschine nach der Erfindung gemäß einem fünften Ausführungsbeispiel, und
- Fig. 6b: eine Draufsicht auf einen Werkstücktisch einer Bearbeitungsmaschine nach der Erfindung gemäß einem sechsten Ausführungsbeispiel.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

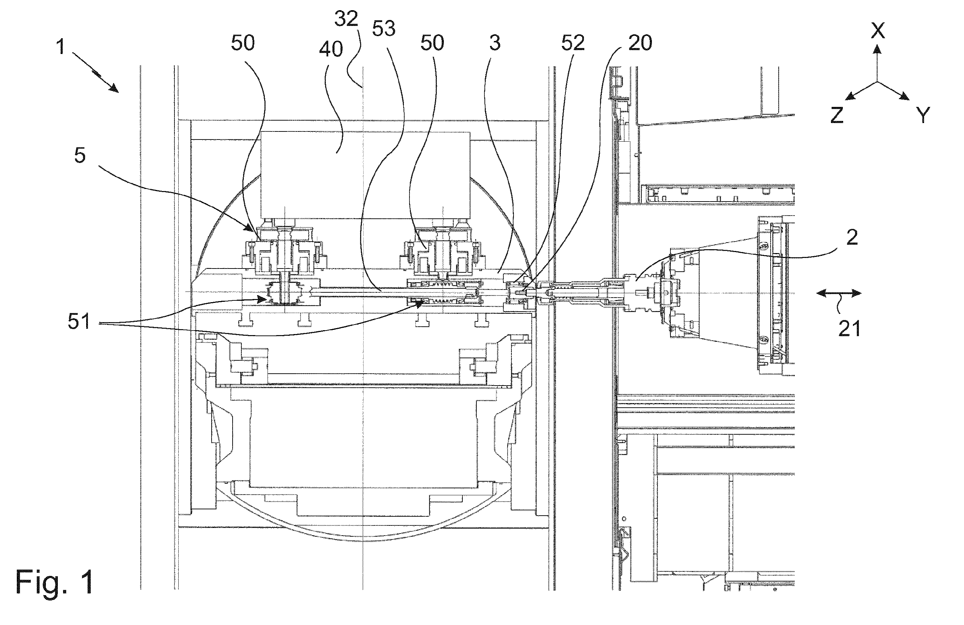

Figur 1 zeigt eine Seitenansicht einer Bearbeitungsmaschine 1 gemäß einem ersten Ausführungsbeispiel. Die Bearbeitungsmaschine 1 ist zur Bearbeitung eines nicht gezeigten Werkstücks ausgebildet, welches von einer Palette 40 gehalten wird. Die Palette 40 wird in weiter unten näher beschriebener Weise auf einem Werkstücktisch 3 gehalten. Der Werkstücktisch 3 ist um eine vertikale Achse 32 drehbar, so dass die Palette 40 entsprechend gedreht werden kann.

Zur Bearbeitung des Werkstücks ist eine Motorspindel 2 vorhanden, welche dazu ausgebildet ist, ein Werkzeug aufzunehmen und rotatorisch anzutreiben. Beispielsweise kann es sich dabei um einen Bohrer oder um einen Schleifkopf handeln. Die Motorspindel 2 kann jedoch auch ein Werkzeug aufnehmen, welches speziell dafür ausgebildet ist, Einrichtungen auf dem Werkstücktisch 3 in weiter unten näher beschriebener Weise zu betätigen. Beispielsweise kann hierzu ein Sechskant aufgenommen werden.

In dem Werkstücktisch 3 ist eine Spannvorrichtung 5 vorgesehen. Die Spannvorrichtung 5 weist zwei Spannmittel 50 auf. Die Spannmittel 50 sind dazu ausgebildet, die Palette 40 auf dem Werkstücktisch 3 zu halten. Jedem Spannmittel 50 ist dabei ein Spannantrieb 51 zugeordnet, welcher zur Betätigung des Spannmittels 50, also insbesondere zum Spannen und Lösen der Palette 40, dient.

Zum gemeinsamen Antrieb der Spannantriebe 51 weist die Spannvorrichtung 5 ferner einen Spannenergieanschluss 52 auf. Dieser ist an einer Außenseite des Werkstücktisches 3 angeordnet und dient dazu, ein Werkzeug zur Betätigung des Spannenergieanschlusses 52 aufzunehmen. Ein solches Werkzeug kann beispielsweise ein Sechskant sein, welcher in der Motorspindel 2 gehalten und von dieser angetrieben wird, wie dies bereits weiter oben beschrieben wurde. Dies ermöglicht es, mittels der Motorspindel 2 die Spannvorrichtung 5 anzutreiben, wozu ein Drehstab 53 zur Verbindung des Spannenergieanschlusses 52 mit den Spannmitteln 50 vorgesehen ist. Der Sechskant kann bei dieser Verwendung als Energieübertragungsanschlussstück 20 bezeichnet werden.

Die gezeigte und beschriebene Ausführung ermöglicht es, die ohnehin zur Bearbeitung von Werkstückten vorhandene Motorspindel 2 auch zum Einspannen und Ausspannen der Palette 40 zu verwenden. Damit kann auf das Vorsehen zusätzlicher Antriebsorgane verzichtet werden. Insbesondere kann auf aufwändige, fehler- und wartungsanfällige Mechanismen zur Übertragung von elektrischer oder mechanischer Energie auf den drehbaren Werkstücktisch 3 verzichtet werden.

Die Motorspindel 2 ist entlang ihrer Drehachse bewegbar, was durch einen Doppelpfeil 21 angezeigt ist. Dies ermöglicht es, das Energieübertragungsanschlussstück 20 an den Werkstücktisch 3 heranzufahren und wieder von diesem zu entfernen. Damit kann der Werkstücktisch 3 in eine Ausrichtung gedreht werden, welche einen Eingriff des in der Motorspindel 2 gehaltenen Energieübertragungsanschlussstücks 20 ermöglicht, so dass ein Einspannen oder Ausspannen der Palette 40 unter Verwendung der Motorspindel 2 erfolgen kann. Anschließend kann das Energieübertragungsanschlussstück 20 wieder entfernt werden, was es ermöglicht, den Werkstücktisch 3 wieder zu verdrehen oder anderweitig in eine Stellung für die Bearbeitung des Werkstücks zu bringen.

Die Motorspindel 2 ist vorliegend im Übrigen dreidimensional bewegbar, wie dies durch ein Achsenkreuz in Figur 1 dargestellt ist. Dies ermöglicht das freie Verfahren der Motorspindel 2 zur Bearbeitung des Werkstücks.

Die Bearbeitungsmaschine 1 weist ferner nicht dargestellte Mittel zum automatisierten Wechseln des in der Motorspindel 2 gehaltenen Werkzeugs auf. Dies ermöglicht es nicht nur, unterschiedliche Arten von Werkzeugen ohne manuellen Eingriff zu verwenden, sondern auch automatisiert das Energieübertragungsanschlussstück 20 in die Motorspindel 2 zu verbringen und wieder zu entfernen.

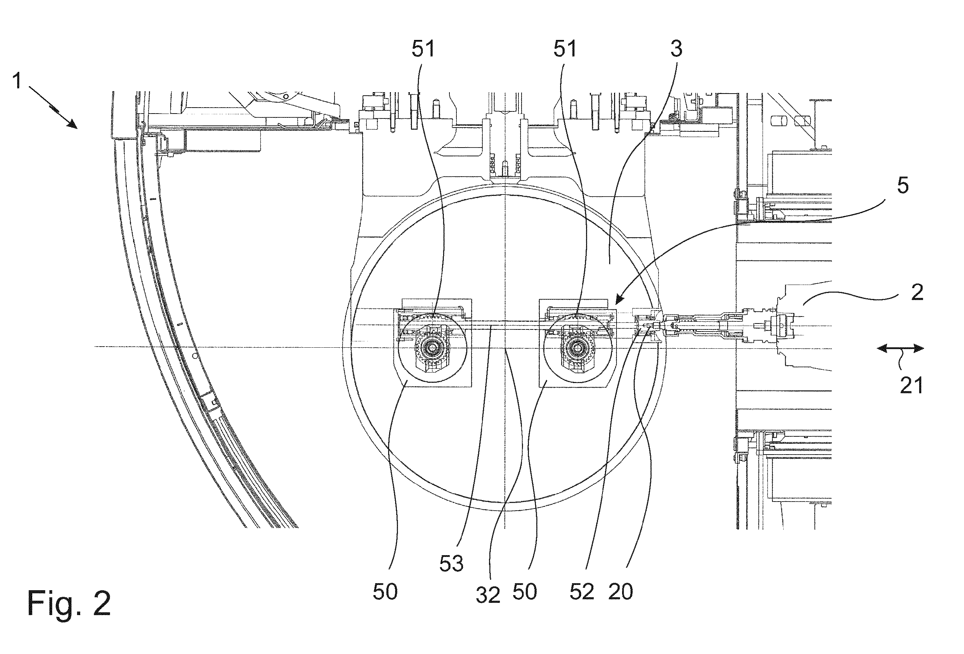

Figur 2 zeigt eine Draufsicht auf die Bearbeitungsmaschine 1 gemäß dem ersten Ausführungsbeispiel. Dabei ist zu erkennen, dass die beiden Spannmittel 50 in jeweils etwa gleicher Entfernung zum horizontalen Mittelpunkt des Werkstücktisches 3 angeordnet sind. Dies ermöglicht ein Aufspannen der Palette 40 bzw. eines Werkstücks über dem horizontalen Mittelpunkt, durch welchen auch die Drehachse 32 des Werkstücktisches 3 verläuft. Dies hilft, Unwuchten zu minimieren oder zu vermeiden.

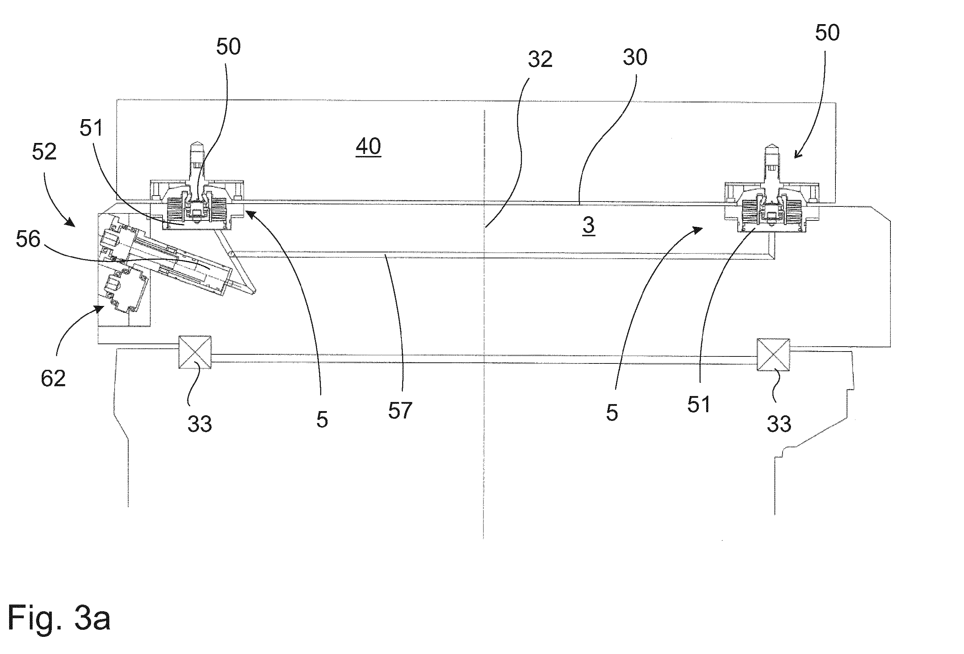

Figur 3a zeigt eine seitliche Schnittansicht eines Werkstücktischs 3 einer Bearbeitungsmaschine gemäß einem zweiten Ausführungsbeispiel. Dabei ist zu erkennen dass die beiden Spannmittel 50 der Spannvorrichtung 5 hydraulisch betätigt werden. Hierzu ist in dem Werkstücktisch 3 eine Hydraulikpumpe 56 vorgesehen, welche über Hydraulikleitungen 57 fluidisch mit den Spannmitteln 50 verbunden ist. Die Hydraulikpumpe 56 ist mittels des Spannenergieanschlusses 52 betätigbar. Dies bedeutet insbesondere, dass ein in den Spannenergieanschluss 52 aufgenommener Sechskant oder ein ähnlicher Mitnehmer den Spannenergieanschluss 52 drehen kann, wobei die dadurch vermittelte Energie zum Betrieb der Hydraulikpumpe 56 verwendet wird, welche hydraulisches Fluid zu den Spannmitteln 50 pumpt oder von diesen abzieht, je nach Drehrichtung des Mitnehmers. Dies ermöglicht auch eine einstellbare Untersetzung der aufgewendeten Kraft.

Des Weiteren ist zu erkennen, dass der Werkstücktisch 3 der Bearbeitungsmaschine 1 gemäß dem zweiten Ausführungsbeispiel auch einen Hebeenergieanschluss 62 aufweist. Dieser ist unmittelbar unterhalb des Spannenergieanschlusses 52 angeordnet. Die Funktion des Hebeenergieanschlusses 62 wird weiter unten näher beschrieben werden.

Außerdem ist zu erkennen, dass der Werkstücktisch 3 auf Lagern 33 gelagert ist, welche die für eine Drehung des Werkstücktisches 3 um die Drehachse 32 erforderliche Drehbarkeit sicherstellen. Obenseitig bildet der Werkstücktisch 3 eine Werkstücktischoberfläche 30 aus, auf welchem die Palette 40 aufliegt.

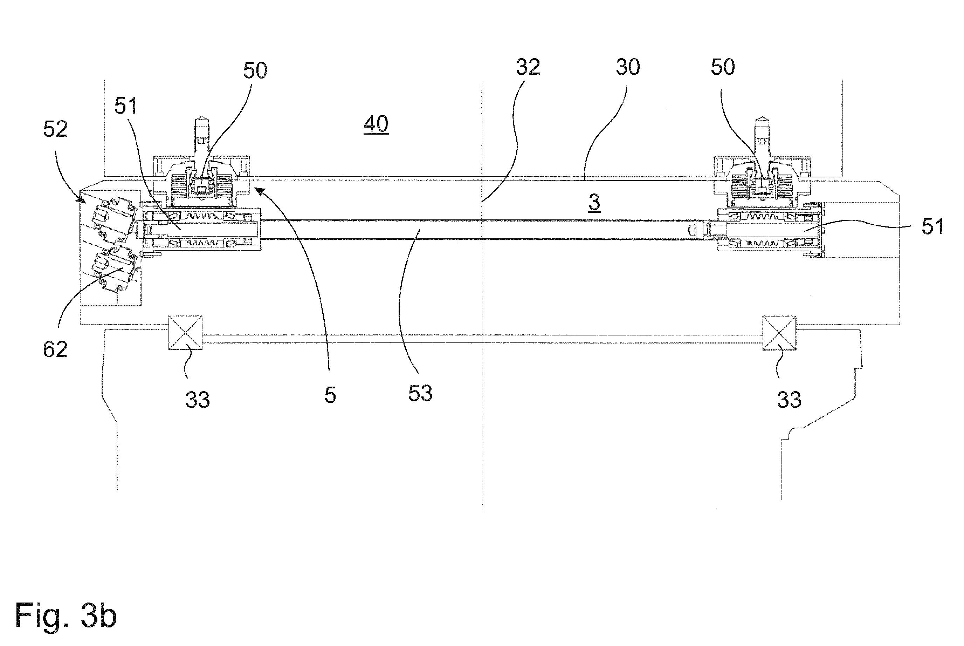

Figur 3b zeigt eine seitliche Schnittansicht eines Werkstücktischs 3 einer Bearbeitungsmaschine gemäß einem dritten Ausführungsbeispiel. Die Spannvorrichtung 5 gemäß dem dritten Ausführungsbeispiel weist im Unterscheid zum zweiten Ausführungsbeispiel keine hydraulische Betätigung der Spannmittel 50 auf. Vielmehr ist eine mechanische Betätigung mittels eines Drehstabs 53 ähnlich wie beim ersten Ausführungsbeispiel vorgesehen. Auch damit kann eine zuverlässige Betätigung der Spannmittel 50 in beiden Richtungen und mit einstellbarer Untersetzung erreicht werden.

Im Unterschied zum ersten Ausführungsbeispiel weist der Drehtisch 3 gemäß dem dritten Ausführungsbeispiel zusätzlich zum Spannenergieanschluss 52 einen Hebeenergieanschluss 62 auf, welcher ähnlich zum zweiten Ausführungsbeispiel unter dem Spannenergieanschluss 52 angeordnet ist. Auf dessen Funktion wird weiter unten näher eingegangen.

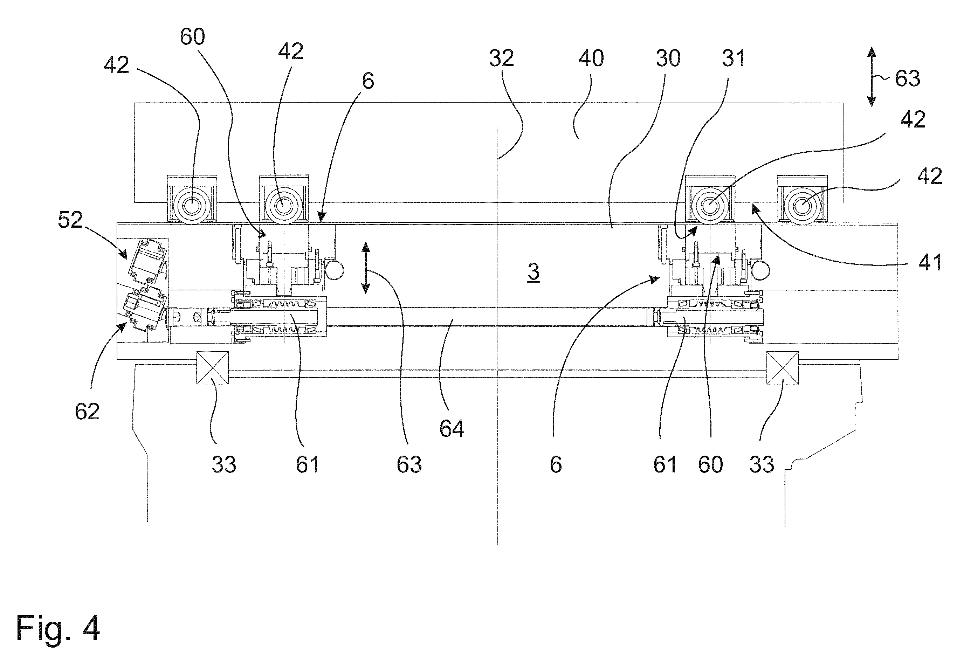

Figur 4 zeigt den Werkstücktisch 3 gemäß dem dritten Ausführungsbeispiel in einer anderen seitlichen Schnittansicht. Dabei ist zu erkennen, dass der Werkstücktisch 3 eine Hebevorrichtung 6 aufweist. Die Hebevorrichtung 6 weist zwei Hebemittel 60 auf, welche beabstandet zueinander angeordnet sind. Jedem Hebemittel 60 ist eine ist ein Hebeantrieb 61 zugeordnet, welcher zum Antrieb des Hebemittels 60 dient. Bei entsprechender Betätigung kann sich das jeweilige Hebemittel 60 entlang einer vertikalen Richtung 63 bewegen und damit auch aus der Werkstücktischoberfläche 30 des Werkstücktisches 30 hervortreten. Die damit erreichbare Funktionalität wird weiter unten beschrieben werden.

Zur Betätigung der Hebeantriebe 61 dient der bereits weiter oben erwähnte Hebeenergieanschluss 62. Dieser ist mittels eines weiteren Drehstabs 64 mit den Hebeantrieben 61 verbunden. Dies erlaubt eine Kraftübertragung von einem in den Hebeenergieanschluss 62 einzuführenden Energieübertragungsanschlussstück 20 zu den Hebeantrieben 61 und damit eine Betätigung der Hebemittel 60 in beiden Richtungen.

Die Palette 40 ist an ihrer Unterseite 41 mit Laufrollen 42 versehen, mittels welchen die Palette 40 unter anderem über die Werkstücktischoberfläche 30 laufen kann. Die Werkstücktischoberfläche 30 bildet somit einen Laufbahnabschnitt 31 aus. Die Laufrollen 42 können insbesondere auch dazu verwendet werden, die Palette 40 von einem nicht gesondert gezeigten Vorplatz auf die Werkstücktischoberfläche 30 zu schieben.

Wenn sich eine jeweilige Rolle 42 über einem Hebemittel 60 befindet, kann das jeweilige Hebemittel 60 durch die eben beschriebene Betätigung angehoben werden. Damit wird die Rolle 42 fixiert, d.h. sie kann sich nicht mehr horizontal über die Werkstücktischoberfläche 30 bewegen. Werden mehrere Rollen 42 derart fixiert, so wird auch die Palette 40 insgesamt fixiert. Die Hebevorrichtung 6 kann somit vorteilhaft dazu verwendet werden, die Palette zu fixieren, so dass ein von der Palette 40 gehaltenes Werkstück bearbeitet werden kann. Dies erfordert nicht den Einbau zusätzlicher Antriebsmechanismen oder störanfälliger Energieübertragungsmechanismen, sondern kann unter alleiniger Verwendung der Motorspindel 2 mit entsprechendem Werkzeug durchgeführt werden.

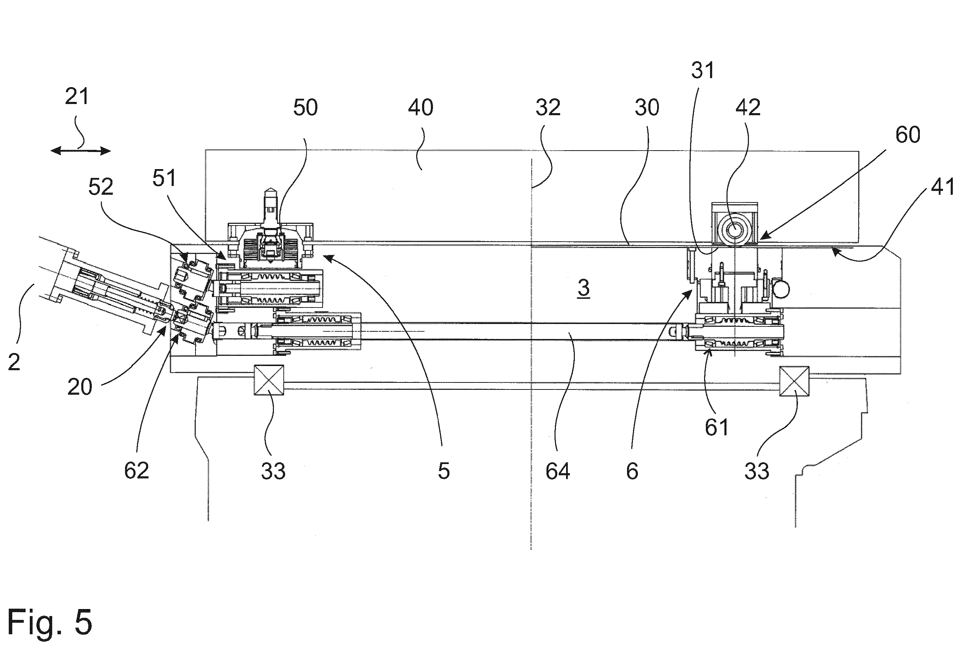

Figur 5 zeigt eine seitliche Schnittansicht eines Werkstücktischs 3 gemäß einem vierten Ausführungsbeispiel. Dabei ist im Gegensatz zur Darstellung der Figur 4 nur der Antrieb eines Hebemittels 61 gezeigt. Außerdem ist ein Spannmittel 50 mit Spannantrieb 51 neben dem Spannenergieanschluss 52 gezeigt.

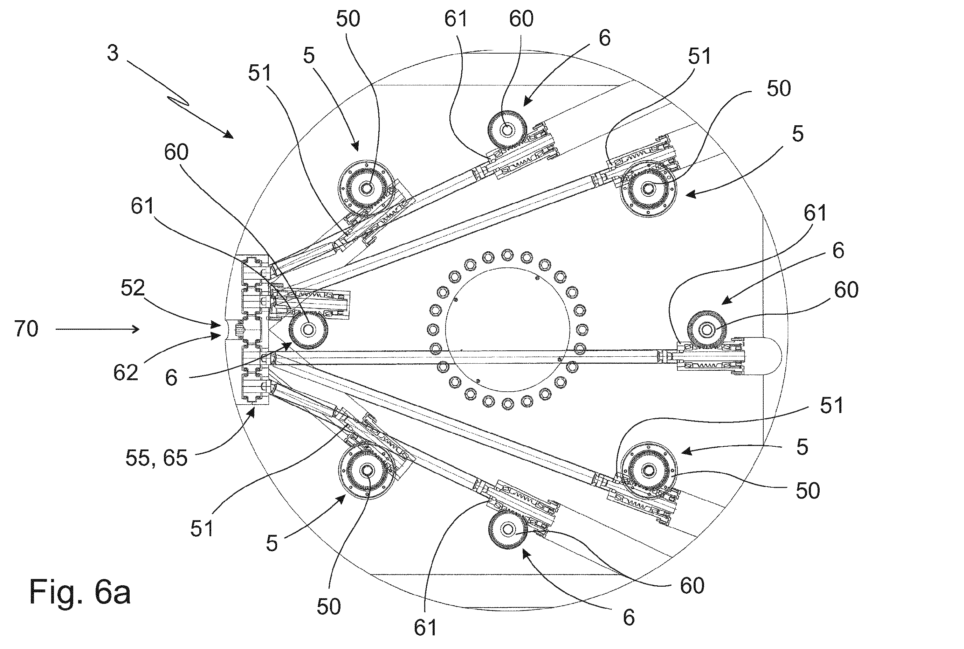

Figur 6a zeigt eine Schnittansicht in Draufsicht eines Werkstücktisches 3 gemäß einem fünften Ausführungsbeispiel. Dabei sind sowohl Spannmittel 50 wie auch Hebemittel 60 mit ihren bereits beschriebenen, zum Antrieb verwendeten Komponenten sowie deren Anordnung auf dem Werkstücktisch 3 zu erkennen. Des Weiteren ist zu erkennen, dass in dem Werkstücktisch 3 Getriebe 55, 65 zum Antrieb der Spannvorrichtung 5 und der Hebevorrichtung 6 vorgesehen sind. Diese sind mit einem zentralen Energieanschluss 70 verbunden, welcher somit die Funktion des Spannenergieanschlusses 52 und des Hebeenergieanschlusses 62 vereint. Die Getriebe 55, 65 sind umschaltbar mit dem zentralen Energieanschluss 70 verbindbar, wobei der zur Umschaltung verwendete Mechanismus nicht gezeigt ist. Auf das Vorsehen zweier Anschlüsse kann somit verzichtet werden.

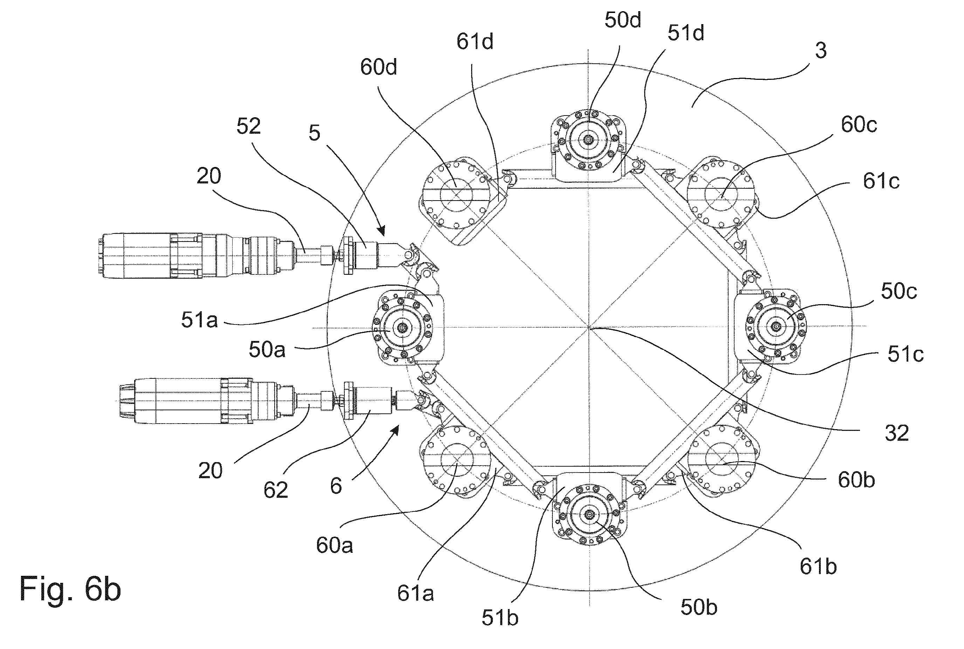

Figur 6b zeigt eine Schnittansicht in Draufsicht eines Werkstücktisches 3 gemäß einem sechsten Ausführungsbeispiel, welches im Vergleich zum fünften Ausführungsbeispiel insofern abgewandelt ist, als kein zentraler Energieanschluss 70, sondern zwei separate Anschlüsse 52, 62 vorgesehen sind. Mittels des Spannenergieanschlusses 52 werden vier Spannmittel 50a, 50b, 50c, 50d mit jeweils zugeordnetem Spannantrieb 51a, 51b, 51c, 51d betrieben. Mittels des Hebeenergieanschlusses 62 werden vier Hebemittel 60a, 60b, 60c, 60d mit jeweils zugeordnetem Hebeantrieb 61a, 61b, 61c, 61d betrieben. Dies erfolgt in der weiter oben beschriebenen Art und Weise.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, daß sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Die Erfindung umfasst:
Eine Bearbeitungsmaschine, insbesondere spanabhebende Bearbeitungsmaschine mit mindestens einer je ein Werkzeug rotativ antreibenden Motorspindel und einem Werkstücktisch an oder auf welchem das mindestens eine Werkstück unmittelbar oder mittelbar über eine das Werkstück tragende Palette während der spanabhebenden Bearbeitung durch eine Spannvorrichtung aufgespannt ist und die Spannvorrichtung zumindest ein Spannmittel, einen Spannantrieb und einen Spannenergieanschluss umfasst, wobei das Spannmittel mit dem Werkstück oder der das Werkstück tragenden Palette zusammenwirkt, der Spannantrieb, unter Verwendung der vom Spannenergieanschluss zur Verfügung gestellten Energie, das Spannmittel zum Spannen und/oder Lösen des Werkstückes antreibt und der Spannenergieanschluss temporär mit einem Energieübertragungsanschlussstück verbindbar ist, wobei das Energieübertragungsanschlussstück mit einer Energiequelle in Wirkverbindung steht und das Energieübertragungsanschlussstück relativ zum Spannenergieanschluss durch einen Bewegungsantrieb anstellbar oder zurück bewegbar ist.

Eine wie zuvor ausgeführte Bearbeitungsmaschine, wobei der Werkstücktisch entlang einer Linearführung durch einen Linearantrieb beweg- und positionierbar ist.

Eine wie zuvor ausgeführte Bearbeitungsmaschine, wobei der Werkstücktisch um eine vertikale Drehachse bzw. einer zur linearen Achse rechtwinkligen Drehachse durch einen Drehantrieb beweg- und positionierbar ist.

Eine wie zuvor ausgeführte Bearbeitungsmaschine, wobei bei der relativen Anstellbewegung von Energieübertragungsanschlussstück einerseits und dem Spannenergie- oder Hebeenergieanschluss andererseits diese ineinander, insbesondere formschlüssig ineinander gesteckt werden.

Eine wie zuvor ausgeführte Bearbeitungsmaschine, wobei am Werkstücktisch ein zentraler Energieanschluss vorgesehen ist, der temporär als Spannenergieanschluss und temporär als Hebeenergieanschluss dient und eine Umschaltvorrichtung für das wahlweise Verbinden des Spannantriebes oder des Hebeantriebes mit dem Energieanschluss vorgesehen ist.

Eine wie zuvor ausgeführte Bearbeitungsmaschine, wobei als Energiequelle die Rotationsenergie eines Schraubers oder der Motorspindel, elektrische Energie, pneumatische oder hydraulische Energie dient und das Energieübertragungsanschlussstück als drehmomentübertragendes Element, zum Beispiel als Mehrkant, als elektrischer Steckkontakt oder als pneumatisches bzw. hydraulisches Kupplungselement ausgebildet ist.

Eine wie zuvor ausgeführte Bearbeitungsmaschine, wobei der Spannenergieanschluss bzw. der Hebeenergieanschluss als Wellenstutzen zum Abtrieb der anschließbaren Rotationsenergiequelle, als elektrischer Steckgegenkontakt oder als hydraulisches bzw. pneumatisches Kupplungsgegenelement ausgebildet ist.

Eine wie zuvor ausgeführte Bearbeitungsmaschine, wobei das Energieübertragungsanschlussstück an der Bearbeitungsmaschine ortsfest angeordnet ist und der Werkstücktisch und damit verbunden der Spann- bzw. Hebeenergieanschluss entlang einer Linearführung in einer Linearbewegung oder rotativ in einer Drehbewegung um eine Drehachse an das Energieübertragungsanschlussstück anstellbar, verbindbar und auch wieder trennbar ist.

Eine wie zuvor ausgeführte Bearbeitungsmaschine, wobei der Bewegungsantrieb identisch ist mit dem Linearantrieb.

Eine wie zuvor ausgeführte Bearbeitungsmaschine, wobei die Motorspindel entlang zweier Linearachsen durch je einen Motorspindellinearantrieb beweglich positionierbar ist, wobei die beiden Linearachsen der Motorspindel rechtwinklig zur Längserstreckung der Linearführung des Werkstücktischs angeordnet sind.

Eine wie zuvor ausgeführte Bearbeitungsmaschine, wobei der Bewegungsantrieb gebildet ist von mindestens einem Motorspindellinearantrieb.

Eine wie zuvor ausgeführte Bearbeitungsmaschine, wobei als Spann- oder Hebeantrieb ein Getriebe, eine Hydraulikpumpe, ein Elektromotor, ein Druckvorrat oder ein Druckspeicher vorgesehen ist.

Eine wie zuvor ausgeführte Bearbeitungsmaschine, wobei als Spannmittel eine federbelastete Spannzangenanordnung vorgesehen ist und der Spannantrieb eine der Feder entgegen gerichtete Kraft für das Öffnen des Spannmittels entfaltet.

Eine wie zuvor ausgeführte Bearbeitungsmaschine, wobei das Hebemittel eine Linearführung aufweist und die Rollenbahn oder den Laufbahnabschnitt anhebt bzw. absenkt.

Eine wie zuvor ausgeführte Bearbeitungsmaschine, wobei am Werkstücktisch, insbesondere im Bereich des Spann- bzw. Hebeenergieanschlusses ein Steuerungsleitungsanschluss angeordnet ist, der mit dem Spannantrieb, dem Hebeantrieb oder der Umschaltvorrichtung in Wirkverbindung steht und mit einem Steuerleitungsanschlussstück verbindbar ist und das Steuerleitungsanschlussstück mit der Maschinensteuerung der Bearbeitungsmaschine in Verbindung steht und das Steuerleitungsanschlussstück durch einen Bewegungsantrieb relativ zum Steuerleitungsanschluss anstellbar und zurück bewegbar ist.

Eine wie zuvor ausgeführte Bearbeitungsmaschine, wobei je zwei der vorzugsweise vier Hebe- bzw. Spannmittel über einen Teilenergiestrang verbunden sind.

Eine wie zuvor ausgeführte Bearbeitungsmaschine, wobei das Spannmittel eine Spannkraft parallel, insbesondere radial bezogen auf die Drehachse oder rechtwinklig zur Werkstückoberfläche des Werkstücktischs entfaltet.

Die Erfindung umfasst auch ein Verfahren für das Laden eines Werkstückes von einem Vorplatz auf oder an den Werkstücktisch einer Bearbeitungsmaschine, insbesondere nach einem der vorhergehenden Ansprüche, mit einer Hebevorrichtung und einer Spannvorrichtung, wobei das Werkstück auf einer im Werkstücktisch angeordneten Rollenbahn oder das Werkstück auf einer das Werkstück tragenden Palette mit Laufrollen auf dem Werkstücktisch transportiert wird und sich die Laufrollen am Ende der Bewegung auf Laufbahnabschnitten befinden, wobei gleichzeitig oder danach ein Energieübertragungsanschlussstück derart relativ zum Werkstücktisch bewegt wird, dass eine Verbindung zwischen dem Energieübertragungsanschlussstück und einem Hebeenergieanschluss hergestellt wird, hierüber dann Energie zu einem Hebemittel der Hebevorrichtung gelangt und die Rollenbahn oder die Laufbahnabschnitte derart abgesenkt wird/werden, dass die Rollenbahn bzw. Laufrollen nicht mehr aktiv sind und das Werkstück bzw. die das Werkstück tragende Palette auf dem Werkstücktisch ruht, wobei gleichzeitig oder hernach das Energieübertragungsanschlussstück derart relativ zum Werkstücktisch bewegt oder die Umschaltvorrichtung betätigt wird, dass eine Verbindung zwischen dem Energieübertragungsanschlussstück und einem Spannenergieanschluss hergestellt wird, hierüber dann Energie zu einem Spannmittel der Spannvorrichtung gelangt und an dem Werkstück oder der das Werkstück tragenden Palette angeordnete, mit dem Spannmittel zusammenwirkende Spannelemente zugreifen und lagegenau auf dem Werkstücktisch festspannen und hernach das Energieübertragungsanschlussstück relativ zum Spannenergieanschluss beabstandet wird, wodurch die Wirkverbindung von Energieübertragungsanschlussstück und Spannenergieanschluss getrennt wird.

Das zuvor genannte Verfahren, wobei nachdem das Werkstück bzw. die das Werkstück tragende Palette auf dem Werkstücktisch ruht der Werkstücktisch gedreht und/oder linear bewegt wird.

Das zuvor genannte Verfahren, wobei zunächst das Energieübertragungsanschlussstück mit dem Hebeenergieanschluss verbunden ist, diese Verbindung getrennt wird, der Werkstücktisch gedreht und/oder linear bewegt wird und hernach das Energieübertragungsanschlussstück mit dem Spannenergieanschluss verbunden wird.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungsmaschine, insbesondere spanabhebende Bearbeitungsmaschine mit mindestens einer je ein Werkzeug rotativ antreibenden Motorspindel (2) und einem Werkstücktisch (3) an oder auf welchem das mindestens eine Werkstück unmittelbar oder mittelbar über eine das Werkstück tragende Palette (40) während der spanabhebenden Bearbeitung durch eine Spannvorrichtung (5) aufgespannt ist und die Spannvorrichtung (5) zumindest ein Spannmittel (50), einen Spannantrieb (51) und einen Spannenergieanschluss (52) umfasst, wobei das Spannmittel (50) mit dem Werkstück oder der das Werkstück tragenden Palette (40) zusammenwirkt, der Spannantrieb (51), unter Verwendung der vom Spannenergieanschluss (52) zur Verfügung gestellten Energie, das Spannmittel (50) zum Spannen und/oder Lösen des Werkstückes antreibt und der Spannenergieanschluss (52) temporär mit einem Energieübertragungsanschlussstück (20) verbindbar ist, wobei das Energieübertragungsanschlussstück (20) mit einer Energiequelle in Wirkverbindung steht und das Energieübertragungsanschlussstück (20) relativ zum Spannenergieanschluss (52) durch einen Bewegungsantrieb anstellbar oder zurück bewegbar (21) ist.

2. Bearbeitungsmaschine, insbesondere spanabhebende Bearbeitungsmaschine mit mindestens einer je ein Werkzeug rotativ antreibenden Motorspindel (2) und einem Werkstücktisch (3) an oder auf welchem das mindestens eine Werkstück unmittelbar oder mittelbar über eine das Werkstück tragende Palette (40) während der spanabhebenden Bearbeitung lagegenau durch eine Spannvorrichtung (5) aufgespannt ist, insbesondere nach Anspruch 1, wobei für den Transport des Werkstückes bzw. der das Werkstück tragenden Palette (40) von einem Vorplatz zum Werkstücktisch (3) und zurück auf der Werkstücktischoberfläche (30) eine Rollenbahn vorgesehen ist, auf der das Werkstück bzw. die Palette (40) für den Transport aufliegt oder die Palette (40) auf ihrer Unterseite (41) mit Laufrollen (42) ausgestattet ist und sich die Laufrollen (42) in der Spannposition des Werkstückes bzw. der Palette (40) auf dem Werkstücktisch (3) je in einem Laufbahnabschnitt (31) befinden und im Werkstücktisch (3) eine Hebevorrichtung (6) vorgesehen ist, wobei die Hebevorrichtung (6) zumindest ein Hebemittel (60), einen Hebeantrieb (61) und einen Hebeenergieanschluss (62) umfasst, wobei das Hebemittel (60) mit der Rollenbahn oder den Laufbahnabschnitten (31) zusammenwirkt, der Hebeantrieb (61), unter Verwendung der von dem Hebeenergieanschluss (62) zur Verfügung gestellten Energie das Hebemittel (60) zum Absenken und/oder Anheben der Rollenbahn oder des Laufbahnabschnittes (31) antreibt und der Hebeenergieanschluss (62) temporär mit einem Energieübertragungsanschlussstück (20) verbindbar ist, wobei das Energieübertragungsanschlussstück (20) mit einer Energiequelle in Wirkverbindung steht und das Energieübertragungsanschlussstück (20) relativ zum Hebeenergieanschluss (62) durch einen Bewegungsantrieb anstellbar oder zurück bewegbar (21) ist.

3. Bearbeitungsmaschine nach einem der vorhergehenden Ansprüche, **dadurch gekennzeichnet, dass** der Werkstücktisch (3) entlang einer Linearführung durch einen Linearantrieb beweg- und positionierbar ist und/oder der Werkstücktisch (3) um eine vertikale Drehachse (32) bzw. einer zur linearen Achse rechtwinkligen Drehachse (32) durch einen Drehantrieb beweg- und positionierbar ist.

4. Bearbeitungsmaschine nach einem der vorhergehenden Ansprüche, **dadurch gekennzeichnet, dass** bei der relativen Anstellbewegung (21) von Energieübertragungsanschlussstück (20) einerseits und dem Spannenergie- (52) oder Hebeenergieanschluss (62) andererseits diese ineinander, insbesondere formschlüssig ineinander gesteckt werden.

5. Bearbeitungsmaschine nach einem der vorhergehenden Ansprüche, **dadurch gekennzeichnet, dass** am Werkstücktisch (3) ein zentraler Energieanschluss (70) vorgesehen ist, der temporär als Spannenergieanschluss (52) und temporär als Hebeenergieanschluss (62) dient und eine Umschaltvorrichtung für das wahlweise Verbinden des Spannantriebes (51) oder des Hebeantriebes (61) mit dem Energieanschluss vorgesehen ist und/oder als Energiequelle die Rotationsenergie eines Schraubers oder der Motorspindel (2), elektrische Energie, pneumatische oder hydraulische Energie dient und das Energieübertragungsanschlussstück (20) als drehmomentübertragendes Element, zum Beispiel als Mehrkant, als elektrischer Steckkontakt oder als pneumatisches bzw. hydraulisches Kupplungselement ausgebildet ist und/oder der Spannenergieanschluss (52) bzw. der Hebeenergieanschluss (62) als Wellenstutzen zum Abtrieb der anschließbaren Rotationsenergiequelle, als elektrischer Steckgegenkontakt oder als hydraulisches bzw. pneumatisches Kupplungsgegenelement ausgebildet ist.

6. Bearbeitungsmaschine nach einem der vorhergehenden Ansprüche, **dadurch gekennzeichnet, dass** das Energieübertragungsanschlussstück (20) an der Bearbeitungsmaschine ortsfest angeordnet ist und der Werkstücktisch (3) und damit verbunden der Spann- (52) bzw. Hebeenergieanschluss (62) entlang einer Linearführung in einer Linearbewegung oder rotativ in einer Drehbewegung um eine Drehachse (32) an das Energieübertragungsanschlussstück (20) anstellbar, verbindbar und auch wieder trennbar ist und/oder der Bewegungsantrieb identisch ist mit dem Linearantrieb.

7. Bearbeitungsmaschine nach einem der vorhergehenden Ansprüche, **dadurch gekennzeichnet, dass** die Motorspindel (2) entlang zweier Linearachsen (Y,Z) durch je einen Motorspindellinearantrieb beweglich positionierbar ist, wobei die beiden Linearachsen (Y,Z) der Motorspindel (2) rechtwinklig zur Längserstreckung der Linearführung (X) des Werkstücktischs (3) angeordnet sind.

8. Bearbeitungsmaschine nach einem der vorhergehenden Ansprüche, **dadurch gekennzeichnet, dass** der Bewegungsantrieb gebildet ist von mindestens einem Motorspindellinearantrieb und/oder als Spann- (51) oder Hebeantrieb (61) ein Getriebe (55, 65), eine Hydraulikpumpe (56), ein Elektromotor, ein Druckvorrat oder ein Druckspeicher vorgesehen ist.

9. Bearbeitungsmaschine nach einem der vorhergehenden Ansprüche, **dadurch gekennzeichnet, dass** als Spannmittel (50) eine federbelastete Spannzangenanordnung vorgesehen ist und der Spannantrieb (51) eine der Feder entgegen gerichtete Kraft für das Öffnen des Spannmittels (50) entfaltet und/oder das Hebemittel (60) eine Linearführung aufweist und die Rollenbahn oder den Laufbahnabschnitt (31) anhebt bzw. absenkt.

10. Bearbeitungsmaschine nach einem der vorhergehenden Ansprüche, **dadurch gekennzeichnet, dass** am Werkstücktisch (3), insbesondere im Bereich des Spann- (52) bzw. Hebeenergieanschlusses (62) ein Steuerungsleitungsanschluss angeordnet ist, der mit dem Spannantrieb (51), dem Hebeantrieb (61) oder der Umschaltvorrichtung in Wirkverbindung steht und mit einem Steuerleitungsanschlussstück verbindbar ist und das Steuerleitungsanschlussstück mit der Maschinensteuerung der Bearbeitungsmaschine (1) in Verbindung steht und das Steuerleitungsanschlussstück durch einen Bewegungsantrieb relativ zum Steuerleitungsanschluss anstellbar und zurück bewegbar ist.

11. Bearbeitungsmaschine nach einem der vorhergehenden Ansprüche, **dadurch gekennzeichnet, dass** je zwei der vorzugsweise vier Hebe- (60) bzw. Spannmittel (50) über einen Teilenergiestrang verbunden sind und/oder das Spannmittel (50) eine Spannkraft parallel, insbesondere radial bezogen auf die Drehachse (32) oder rechtwinklig zur Werkstückoberfläche (30) des Werkstücktischs entfaltet.

12. Bearbeitungsmaschine mit mindestens einer Motorspindel (2) und einem Werkstücktisch (3) auf welchem das mindestens eine Werkstück während der Bearbeitung durch eine Spannvorrichtung (5) aufgespannt ist und die Spannvorrichtung (5) zumindest ein Spannmittel (50), einen Spannantrieb (51) und einem Wellenstutzen (52) umfasst, wobei das Spannmittel (50) mit dem Werkstück oder einer das Werkstück tragenden Palette (40) zusammenwirkt, der Spannantrieb (51), unter Verwendung der am Wellenstutzen (52) zur Verfügung gestellten Energie, das Spannmittel (50) zum Spannen und/oder Lösen des Werkstückes antreibt und der Wellenstutzen (52) temporär mit einem Schrauber oder der Motorspindel (2) verbindbar ist, wobei der Schrauber oder die Motorspindel (2) relativ zum Wellenstutzen (52) durch einen Bewegungsantrieb anstellbar oder zurück bewegbar (21) ist.

13. Bearbeitungsmaschine mit mindestens einer Motorspindel (2) und einem Werkstücktisch (3) auf welchem das mindestens eine Werkstück während der Bearbeitung durch eine Spannvorrichtung (5) aufgespannt ist, und im Werkstücktisch (3) eine Hebevorrichtung (6) vorgesehen ist, wobei die Hebevorrichtung (6) zumindest ein Hebemittel (60), einen Hebeantrieb (61) und einen Wellenstutzen (62) umfasst, wobei das Hebemittel (60) mit der Rollenbahn zusammenwirkt, der Hebeantrieb (61) unter Verwendung der von dem Wellenstutzen (62) zur Verfügung gestellten Energie das Hebemittel (60) zum Absenken und/oder Anheben der Rollenbahn antreibt und der Wellenstutzen (62) temporär mit einem Schrauber oder der Motorspindel (2) verbindbar ist, wobei der Schrauber oder die Motorspindel (2) relativ zum Wellenstutzen (62) durch einen Bewegungsantrieb anstellbar oder zurück bewegbar (21) ist.

14. Verfahren für das Laden eines Werkstückes von einem Vorplatz auf oder an den Werkstücktisch einer Bearbeitungsmaschine, insbesondere nach einem der vorhergehenden Ansprüche, mit einer Hebevorrichtung und einer Spannvorrichtung, wobei das Werkstück auf einer im Werkstücktisch angeordneten Rollenbahn oder das Werkstück auf einer das Werkstück tragenden Palette mit Laufrollen auf dem Werkstücktisch transportiert wird und sich die Laufrollen am Ende der Bewegung auf Laufbahnabschnitten befinden, wobei gleichzeitig oder danach ein Energieübertragungsanschlussstück derart relativ zum Werkstücktisch bewegt wird, dass eine Verbindung zwischen dem Energieübertragungsanschlussstück und einem Hebeenergieanschluss hergestellt wird, hierüber dann Energie zu einem Hebemittel der Hebevorrichtung gelangt und die Rollenbahn oder die Laufbahnabschnitte derart abgesenkt wird/werden, dass die Rollenbahn bzw. Laufrollen nicht mehr aktiv sind und das Werkstück bzw. die das Werkstück tragende Palette auf dem Werkstücktisch ruht, wobei gleichzeitig oder hernach das Energieübertragungsanschlussstück derart relativ zum Werkstücktisch bewegt oder die Umschaltvorrichtung betätigt wird, dass eine Verbindung zwischen dem Energieübertragungsanschlussstück und einem Spannenergieanschluss hergestellt wird, hierüber dann Energie zu einem Spannmittel der Spannvorrichtung gelangt und an dem Werkstück oder der das Werkstück tragenden Palette angeordnete, mit dem Spannmittel zusammenwirkende Spannelemente zugreifen und lagegenau auf dem Werkstücktisch festspannen und hernach das Energieübertragungsanschlussstück relativ zum Spannenergieanschluss beabstandet wird, wodurch die Wirkverbindung von Energieübertragungsanschlussstück und Spannenergieanschluss getrennt wird.

15. Verfahren nach Anspruch 14, **dadurch gekennzeichnet, dass** nachdem das Werkstück bzw. die das Werkstück tragende Palette auf dem Werkstücktisch ruht der Werkstücktisch gedreht und/oder linear bewegt wird und/oder zunächst das Energieübertragungsanschlussstück mit dem Hebeenergieanschluss verbunden ist, diese Verbindung getrennt wird, der Werkstücktisch gedreht und/oder linear bewegt wird und hernach das Energieübertragungsanschlussstück mit dem Spannenergieanschluss verbunden wird.
